# EUROPEAN PATENT SPECIFICATION

(11) **EP 1 544 008 B1**
(45) Date of publication and mention of the grant of the patent: **07.02.2018**
(21) Application number: 04029736.8
(22) Date of filing: 15.12.2004
(51) Int. Cl.: F25B 27/00, F02D 29/04

(54) **Air conditioner having fuel supply control device**
Klimaanlage mit einer Kraftstoffversorgungs-Steuereinrichtung
Climatiseur contenant un dispositif pour commander le débit de carburant

(30) Priority: 18.12.2003 JP 2003420676; 26.12.2003 JP 2003432071
(43) Date of publication of application: 22.06.2005
(73) Proprietor: SANYO ELECTRIC CO., LTD., Moriguchi-shi, Osaka (JP)
(72) Inventor: Konno, Haruhiko, Ora-gun Gunma (JP); Suzuki, Kentaro, Ageo-shi Saitama (JP)
(74) Representative: Glawe, Delfs, Moll

(56) References cited:
- EP-A2- 1 202 005
- JP-A- 2000 146 263
- JP-A- 2001 304 663
- JP-A- 2003 027 980
- JP-A- 2003 279 108

## Description

### BACKGROUND OF THE INVENTION

### 1. Field of the Invention

The present invention relates to an air conditioner equipped with a compressor driven by an engine and a fuel supply control device for controlling fuel supply to the engine.

### 2. Description of the Related Art

As this type of air conditioner is known a gas heat pump type air conditioner in which a compressor is driven by a gas engine is known (for example, JP-A-10-339251). According to this air conditioner, mixture gas containing fuel gas and air is supplied from a gas engine fuel supply device into the gas engine. The engine fuel supply device as described above has a fuel shut-off valve, and the fuel shut-off valve is controlled by a controller comprising a microcomputer or the like so that unnecessary fuel gas is supplied to the gas engine.

In the gas heat pump type air conditioner as described above, various mechanisms for detecting operation failure of the controller itself for controlling the fuel shut-off valve are used. For example, there is known an air conditioner equipped with a monitoring unit for carrying out monitoring processing of checking an execution status of control data (control program, etc.) stored in a memory, etc. installed in a controller. According to this type of air conditioner, an alarm is emitted when some operation failure occurs during execution of the control data. In the gas heat pump type air conditioner thus constructed, when no alarm is emitted, it is necessarily judged that the operation is normally carried out. Therefore, it is strongly required that the monitoring means (monitoring program) surely operates to carry out the monitoring processing.

Furthermore, there is also known an air conditioner which is equipped with a watch dog timer to detect the operation failure of a controller itself such as a microcomputer or the like, and in which runaway of a program is detected by the watch dog timer to detect operation failure of the controller itself. According to this air conditioner, when overflow of the watch dog timer occurs, watch dog interruption occurs. For example when the watch dog interruption occurs twice sequentially, it is judged that the controller falls into such a runaway state that it cannot be restored by using software, so that the controller is forcedly reset by hardware to carry out the operation again.

However, this air conditioner has a problem that in some cases the above construction may cause the controller to repetitively fall into a condition that the watch dog timer operates after a fuel gas supply operation is carried out.
JP 2001 304 663 A discloses an air conditioner according to the preamble is of claims 1 and 5, respectively.

### SUMMARY OF THE INVENTION

Therefore, an object of the present invention is to provide an air conditioner having a fuel supply control device which can detect operation failure of a controller for fuel supply (for example, malfunction caused by data, a control program or the like stored in a memory of the controller) and quickly and surely shut off the fuel supply when some operation failure is detected.
This object is achieved by an air conditioner according to claim 1 and an air conditioner according to claim 5, respectively; the dependent claims are related to further developments of the invention.

### BRIEF DESCRIPTION OF THE DRAWINGS

Fig. 1 is a diagram showing the construction of a refrigerant circuit and a control system of an air conditioner according to a first embodiment of the present invention;

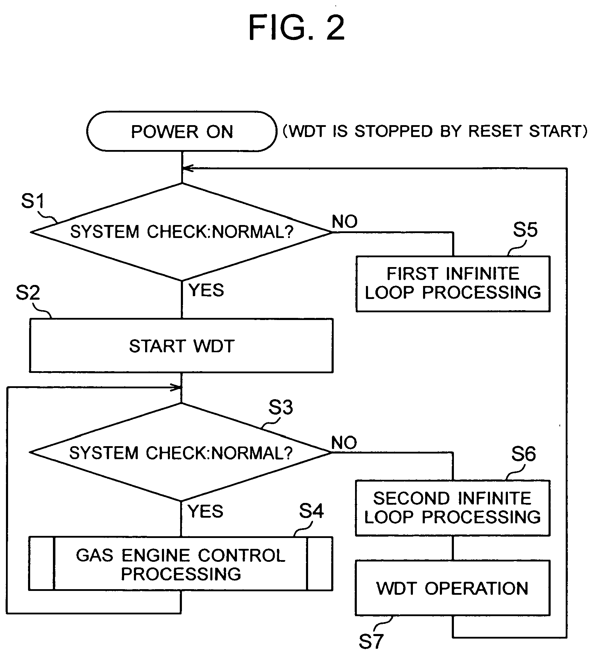

Fig. 2 is a flowchart showing an operation of the first embodiment;
Fig. 3 is a diagram showing the construction of a refrigerant circuit and a control system of an air conditioner according to a second embodiment of the present invention;
Fig. 4 is a diagram showing the structure of a software program (= monitoring program) for controlling a first shut-off valve controller or a second shut-off valve controller of the second embodiment;
Fig. 5 is a processing flowchart (= monitoring program) of the first shut-off valve controller;
Fig. 6 is a diagram showing a communication data format used between the first shut-off valve controller and the second shut-off controller;
Fig. 7 is a processing flowchart of a shut-off valve controller at a communication-data receiving side; and
Fig. 8 is a processing flowchart (= monitoring program) of the second shut-off valve controller.

### PREFERRED EMBODIMENTS ACCORDING TO THE PRESENT INVENTION

Preferred embodiments according to the present invention will be described with reference to the accompanying drawings.

There are various factors to induce operation failure of a fuel supply control device. Particularly, a case where fuel supply is quickly and surely stopped by detecting abnormality of data (containing control data such as control programs for controlling the controller itself, etc.) stored in a memory, etc. equipped to the fuel supply control device will be described hereunder. However, the present invention is not limited to the operation failure of the controller which is caused by the factors described above, and it is needless to say that the present invention may be applied to operation failure caused by other factors affecting the operation of the controller itself.

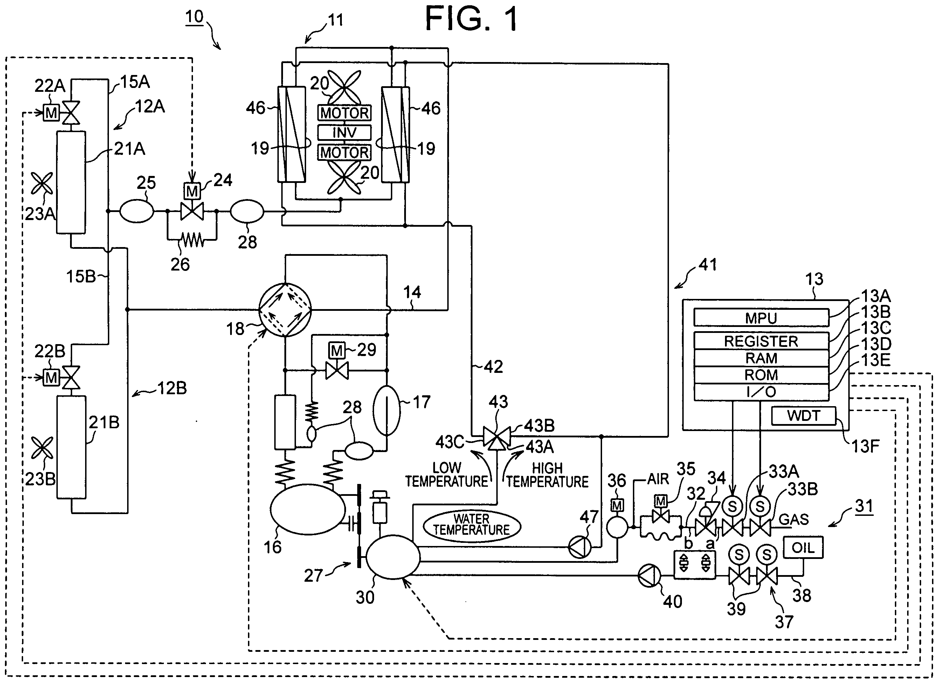

Fig. 1 is a diagram showing the construction of a refrigerant circuit and a control system of an air conditioner according to a first embodiment of the present invention. In the following description, the present invention will be described when it is applied to a case where fuel supply is stopped by detecting abnormality of data stored in a memory (register, RAM, ROM or the like) equipped to the controller.

As shown in Fig. 1, a gas heat pump type air conditioner 10 as a refrigerating machine includes an outdoor unit 11, plural indoor units 12A and 12B and a controller 13. An outdoor refrigerant pipe 14 of the outdoor unit 11 and each of the indoor refrigerant pipes 15A, 15B of the indoor units 12A, 12B are connected to each other.

The outdoor unit 11 is disposed outside, and a compressor 16 is disposed in the outdoor refrigerant pipe 14 of the outdoor unit 11. An accumulator 17 is disposed a the suction side of the compressor 16, and a four-way valve 18 is disposed at the discharge side. Outdoor heat exchangers 19, an outdoor expansion valve 24 and a dry core 25 are successively disposed at the side of the four-way valve 18 of the compressor 16. The compressor 16 is connected to a gas engine 30 through a flexible coupling 27, etc., and driven by the gas engine 30. Furthermore, a bypass pipe 26 is disposed so as to bypass the outdoor expansion valve 24. Outdoor fans 20 for blowing air to the outdoor heat exchangers 19 are further disposed so as to be adjacent to the outdoor heat exchanger 19.

The indoor units 12A and 12B are disposed indoors. An indoor heat exchanger 21A is disposed in the indoor refrigerant pipe 15A, and an indoor expansion valve 22A is disposed in the neighborhood of the indoor heat exchanger 21A in the indoor refrigerant pipe 15A. Likewise, an indoor heat exchanger 21B is disposed in the indoor refrigerant pipe 15B, and an indoor expansion valve 22B is disposed in the neighborhood of the indoor heat exchanger 21B in the indoor refrigerant pipe 15B.

Here, an indoor fan 23A for blowing air to the indoor heat exchanger 21A is disposed so as to be adjacent to the indoor heat exchanger 21A, and an indoor fan 23B for blowing air to the indoor heat exchanger 21B is disposed so as to be adjacent to the indoor heat exchanger 21B.

In Fig. 1, reference numeral 28 represents a strainer, and reference numeral 29 represents a relief valve for relieving the refrigerant pressure at the discharge side of the compressor 16 to the suction side of the compressor 16.

The controller 13 is disposed in the outdoor unit 11, and it is equipped with MPU 13A for controlling the whole of the controller 13, a register 13B, RAM 13C and ROM 13D for storing various kinds of data, an I/O portion 13E for carrying out an interface operation with the external, and a watch dog timer 13F.

The controller 13 controls the operation of the outdoor unit 11 and the indoor units 12a, 12B. Specifically, the controller 13 controls each of the gas engine 30 (that is, the compressor 16), the four-way valve 18, the outdoor fans 20 and the outdoor expansion valve 24 in the outdoor unit 11 and the indoor expansion valves 22A, 22B and the indoor fans 23A, 23B of the indoor units 12A, 12B respectively. Furthermore, the controller 13 also controls fuel shut-off valves 33A, 33B described later and a circulating pump 47 of an engine cooling device 41.

The controller 13 switches the four-way valve 18 so as to set the gas heat pump type air conditioner 10 to cooling operation or heating operation. That is, when the controller 13 switches the four-way valve 18 to the cooling side, refrigerant flows as indicated by an arrow of a solid line, and the outdoor heat exchangers 19 serve as condensers while the indoor heat exchangers 21A, 21B serve as evaporators, thereby setting the air conditioner to a cooling operation state. Accordingly, each indoor heat exchanger 21A, 21B cools rooms.

On the other hand, when the controller 13 switches the four-way valve 18 to the heating side, the refrigerant flows as indicated by an arrow of a broken line, and the indoor heat exchangers 21A, 21B serve as condensers while the outdoor heat exchangers 19 serve as evaporators, thereby setting the air conditioner to a heating operation. Accordingly, each indoor heat exchanger 21A, 21B heats the rooms.

During cooling operation, the controller 13 controls the valve opening degree of each of the indoor expansion valves 22A and 22B in accordance with an air conditioning load. During heating operation, the controller 13 controls the valve opening degree of each of the outdoor expansion valve 24 and the indoor expansion valves 22A, 22B in accordance with an air conditioning load.

Mixture gas is supplied from the engine fuel supply device 31 into a combustion chamber (not shown) of the gas engine 30 for driving the compressor 16. The engine fuel supply device 31 includes the fuel shut-off valves 33A, 33B, a zero governor 34, a fuel adjusting valve 35 and an actuator 36 which are successively disposed in a fuel supply pipe, and an end portion of the fuel supply pipe 32 at the side of the actuator 36 is connected to the combustion chamber of the gas engine 30.

The fuel shut-off valves 33A and 33B are disposed in series to form a two-close type fuel shut-off valve mechanism, and they are fully closed or opened interlockingly with each other, so that each of fuel supply and fuel shut-off is selectively carried out with no leakage of fuel gas.

Here, when the pressure of fuel in the fuel supply pipe 32 at the front stage of the zero governor 34 is referred to as "primary-side fuel gas pressure (primary pressure a) and the pressure of fuel in the fuel supply pipe 32 at the rear stage of the zero governor 34 is referred to as "secondary-side fuel gas pressure (secondary pressure b), the zero governor 34 adjusts the secondary pressure b to fixed predetermined pressure irrespective of variation of the primary pressure a, thereby stabilizing the operation of the gas engine 30.

The fuel adjusting valve 35 adjusts the air-fuel ratio of the mixture gas generated by introducing air from the upstream side of the actuator 36 so that the air-fuel ratio is optimal.

Furthermore, the actuator 36 adjusts the supply amount of the mixture gas supplied to the combustion engine of the gas engine 30 to control the rotational number of the gas engine 30.

An engine oil supply device 37 is connected to the gas engine 30. The engine oil supply device 37 comprises an oil shut-off valve 39, an oil supply pump 40, etc. disposed in an oil supply pipe 38, and serves to suitably supply engine oil to the gas engine 30.

Next, the control operation of the controller 13 will be described hereunder.

It is assumed that under the initial state the fuel shut-off valves 33A and the fuel shut-off valve 33B are set to a shut-off state in which supply of fuel gas is shut off (i.e., a closed state).

When power is turned on, the controller 13 judges whether the controller 13 itself operates normally or not (step S1).

Specifically, MPU 13A of the controller 13 judges whether data stored in memories such as a register 13B, RAM 13C, ROM 13D, etc. equipped in the controller 13 are normal or not (S1). In this case, with respect to data stored in ROM 13D, it is sufficient to carry out data check processing such as parity check, etc. only once at the power-on time because the data in ROM 13D are non-versatile data stored fixedly. On the other hand, with respect to data stored in the register 13B and RAM 13C, data are renewed at needed while various kinds of control are carried out, and it is required to check these data every renewal and judge whether these data are normal or not.

When it is judged in step S1 that the controller 13 cannot operate normally and thus some abnormality occurs in the controller 13, for example, when some part of the data stored in the register 13B, RAM 13C or ROM 13D has an abnormal value, the processing is shifted to first infinite loop processing (step S5).

As a result, the fuel shut-off valve 33A and the fuel shut-off valve 33B are shifted to a shut-off state of fuel gas supply (i.e., closed state) by the controller 13, and then the control of the controller 13 is substantially stopped. That is, the controller 13 cannot escape from the first infinite processing loop unless a user carries out the processing of turning on power again or the like, so that the fuel gas can be prevented from being unnecessarily supplied.

If it is judged in step S1 that the operation of the controller 13 is normal, the controller 13 starts the watch dog timer 13F installed therein (step S2).

That is, the controller 13 resets the watch dog timer 13F, and starts the count operation of the watch dog timer 13F.

Subsequently, the controller 13 judges again whether the controller 13 itself can operate normally (step S3). At this time, with respect to the data stored in ROM 13D, the check of these data was completed at the power-on time as described above, and thus the data stored in the register 13B and RAM 13C are checked again as the processing of judging whether the controller can operate normally.

If it is judged in step S3 that the controller 13 cannot operate normally and thus it has some abnormality (step S3; NG), that is, if some of the data stored in the register 13B or RAM 13C has an abnormal value, the processing is shifted to second infinite loop processing (step S6).

As a result, the fuel shut-off value 33A and the fuel shut-off valve 33B are shifted to the shut-off state of the fuel gas supply (i.e., the closed state), and the control of the controller 13 is stopped, so that the fuel gas is prevented from being unnecessarily supplied.

In this case, when the watch dog timer 13F afterwards finishes its count-up, a watch dog timer interrupt occurs, and the controller 13 escapes from the second infinite loop processing S6, and carries out the watch dog timer operation (step S7). That is, the controller 13 stops the operation of the watch dog timer 13F, and restarts (reset and start) the watch dog timer 13F. As a result, the processing is shifted to the step S1 again, and it is judged whether the controller 13 operates normally (step S1).

At this time, MPU 13A of the controller 13 judges whether the data stored in the register 13B, RAM 13C and ROM 13D are normal or not, and If any abnormality is detected, the fuel shut-off valve 33A and the fuel shut-off valve 33B are shifted to the shut-of state of the fuel gas supply (i.e., the closed state) by the controller 13, and then the control of the controller 13 itself is substantially stopped. Therefore, the controller 13 does not escape from the first infinite processing loop unless a user carries out the processing of turning on power or the like, so that fuel gas can be prevented from being unnecessarily supplied.

If it is judged in step S3 that the operation of the controller 13 is normal (step S3; YES), that is, if the data stored in the register 13B or RAM 13C are normal, the processing goes to the gas engine control processing (step S4). The processing of the step S3 may be carried out at a proper time interval during the gas engine control processing operation (step S4) to make the abnormality judgment on the data stored in the register 13A or RAM 13C as needed.

Here, the gas engine control processing will be described.

The control of the gas engine 3 by the controller 13 is carried out specifically by controlling the fuel shut-off valve 33, the zero governor 34, the fuel adjusting valve 35 and the actuator 36 of the engine fuel supply device 31 and the oil shut-off valve 39 and the oil supply pump 40 of the engine oil supply device 37 by the controller 13.

The gas engine 30 is cooled by engine cooling water circulated in the engine cooling device 41. The engine cooling device 41 has a cooling water pipe 42 having a substantially closed type loop shape which is connected to the gas engine 30 through an exhaust gas heat exchanger (not shown) appended to the gas engine 30 at one end thereof and also directly connected to the gas engine 30 at the other end, and a wax three-way valve 43, radiators 46 and a circulating pump 47 are successively disposed in the cooling water pipe 42.

The circulating pump 47 increases the pressure of the engine cooling water under operation to circulate the engine cooling water in the cooling water pipe 42.

The wax three-way valve 43 is used to quickly warm up the gas engine 30. This wax three-way valve 43 has an inlet port 43A connected to the gas engine 30 in the cooling water pipe 42, a low-temperature side outlet port 43B connected to the suction side of the circulating pup 47 in the cooling water pipe 42 and a high-temperature side outlet port 43C connected to the radiator 46 side in the cooling water pipe 42.

The engine cooling water flows from the discharge side of the circulating pump 47 into the exhaust gas heat exchanger of the gas engine 30 at about 40°C, withdraws exhaust heat (heat of exhaust gas) of the gas engine 30 and then flows into the gas engine 30 to cool the gas engine 30, so that the engine cooling water is heated to about 80°C. When the temperature of the engine cooling water is low (for example, 80°C or less), the engine cooling water flowing from the gas engine 30 to the wax three-way valve 43 is returned from the low-temperature side outlet port 43B to the circulating pump 47 to quickly warm up the gas engine 30. On the other hand, when the temperature of the engine cooling water is high (for example, 80°C or more), the engine cooling water flows from the high-temperature side outlet port 43C to the radiators 46.

The radiators 46 radiate heat of the engine cooling water, and cools the engine cooling water to about 40°C. The engine cooling water cooled by the radiators 46 is passed through the suction side of the circulating pump 47, and returned to the exhaust gas heat exchanger of the gas engine 30 to cool the gas engine 30. Furthermore, the radiators 46 are disposed so as to be adjacent to the outdoor heat exchangers 19 of the air conditioner 10.

When the air conditioner 10 is in cooling or heating operation, the circulating pump 47 of the engine cooling device 41 is operated to circulate the engine cooling water, and the gas engine 30 is cooled by the engine cooling water. The engine cooling water for cooling the gas engine 30 is radiated by the radiators 46, and thus cooled. Particularly when the air conditioner 10 is in heating operation, the heat radiated from the radiators 46 is taken into the outdoor heat exchangers 19 functioning as the evaporators, and used as a heat source of the evaporators.

As described above, according to this embodiment, when some operation failure of the controller 13 (containing defective control data) is detected before the watch dog timer is started or before the processing is shifted to the gas engine control processing, the processing is shifted to the infinite loop processing. Before the watch dog timer is started, the fuel shut-off valve 33A and the fuel shut-off valve 33B are immediately shifted to the shut-off state (closed state) of fuel gas supply, or after the watch dog timer is started, the fuel shut-off valve 33A and the fuel shut-off valve 33B are shifted to the shut-off state (closed state) of fuel gas supply before the gas engine control processing is started. Therefore, the fuel gas supply can be kept to be surely shut off. That is, before and after the watch dog timer is started, it is judged whether any abnormality causing factor (abnormality in data stored in memories, etc.) occurs, and thus the fuel gas supply can be carried out with higher safety.

In the above embodiment, the controller 13 collectively controls the opening/closing operations of the plural fuel shut-off valves, however, in the following embodiment, it is assumed that each fuel shut-off valve is individually controlled by each shut-off valve controller. These shut-off valve controllers are controlled by an overall controller.

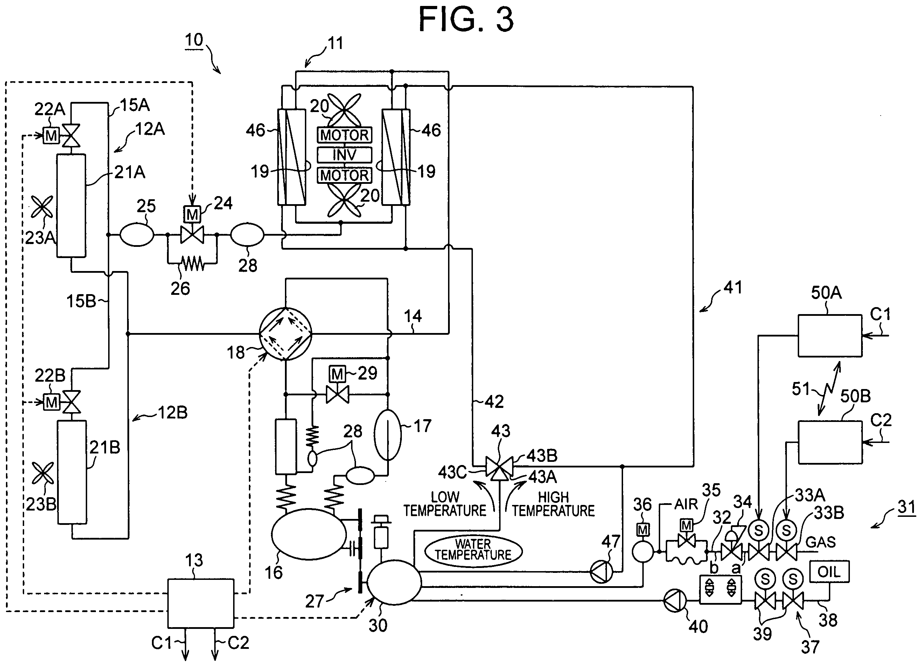

Fig. 3 is a circuit diagram showing a refrigerant circuit according to a second embodiment of the air conditioner according to the present invention. This embodiment is different from the first embodiment shown in Fig. 1 in the construction of the controller for controlling the fuel shut-off valves, and the other constructions of the second embodiment are the same as the first embodiment. Accordingly, the similar elements to those of the first embodiment are represented by the same reference numerals, and the duplicative description thereof is omitted.

Furthermore, according to this embodiment, the fuel shut-of valve 33A is connected to a first shut-off valve controller 50A and controlled by the controller 50A, and the fuel shut-off valve 33B is connected to a second shut-off valve controller 50B and controlled by the controller 50B. When the first shut-off valve controller 50A and the second shut-off valve controller 50B operate normally, they cooperate with each other to fully close or open the fuel shut-off valves 33A and 33B while interlocking the valves 33A and 33B with each other, so that shut-off and pass of fuel gas can be performed with no leakage.

Here, the first shut-off valve controller 50A and the second shut-off valve controller 50B are operated on the basis of control signals C1 and C2 under the control of a controller (central controller) 113, and communicate with each other through a communication line 51.

Here, the control of the first shut-off valve controller 50A and the second shut-off valve controller 50B will be described.

First, the logical structure of a software program for controlling the first shut-off valve controller 50A or the second shut-off valve controller 50B will be described.

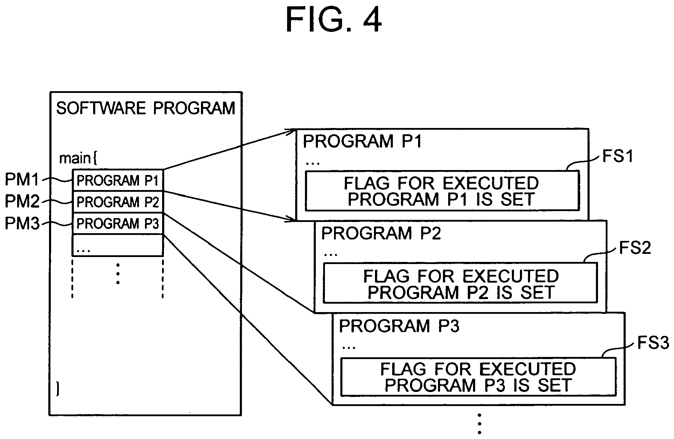

Fig. 4 is a diagram showing the structure of the software program (= control program) for controlling the first shut-off valve controller 50A or the second shut-off valve controller 50B.

The software program for controlling the first shut-off valve controller 50A or the second shut-off valve controller 50B logically comprises plural programs P1, P2, P3, etc., and the programs P1, P2, P3, etc. are constructed as program modules PM1, PM2, PM3, etc.

The processing procedure constituting each of the program modules PM1, PM2, PM3, etc. contains a program execution state checking procedure (monitoring program) having flag set processing FS1, FS2, FS3, etc. of setting a flag when the processing of the corresponding program module (PM1, PM2, PM3, etc.) is normally finished. That is, if a program module is finished normally (i.e., the execution state of the program module concerned is normal), a flag is set. On the other hand, if the program module is not finished normally (i.e., the execution state of the program module concerned is abnormal), no flag is set.

As a result, if the processing of each of the program modules PM1, PM2, PM3, etc. is normally carried out, the corresponding flag is set.

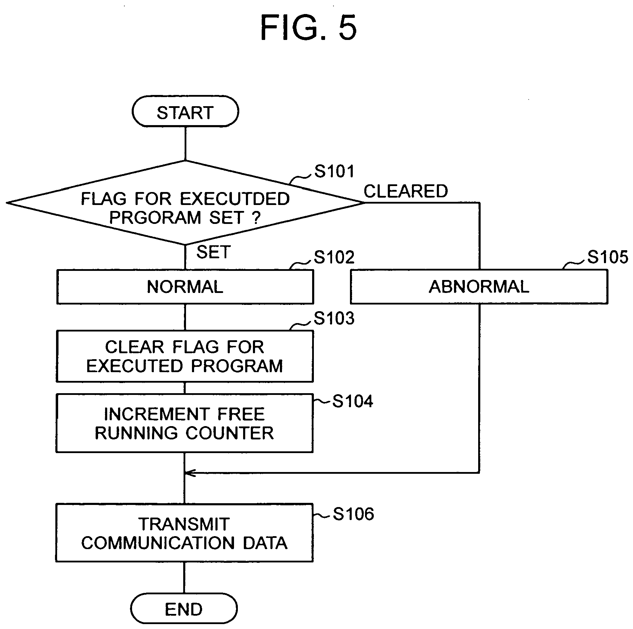

Fig. 5 is a processing flowchart (= monitoring program) of the first shut-off valve controller 50A.

When it is judged that the processing of each of the program modules PM1, PM2, PM3, etc. is normally finished, the first shut-off valve controller 50A judges whether the corresponding flag is set in the executed program module through the monitoring program (step S101).

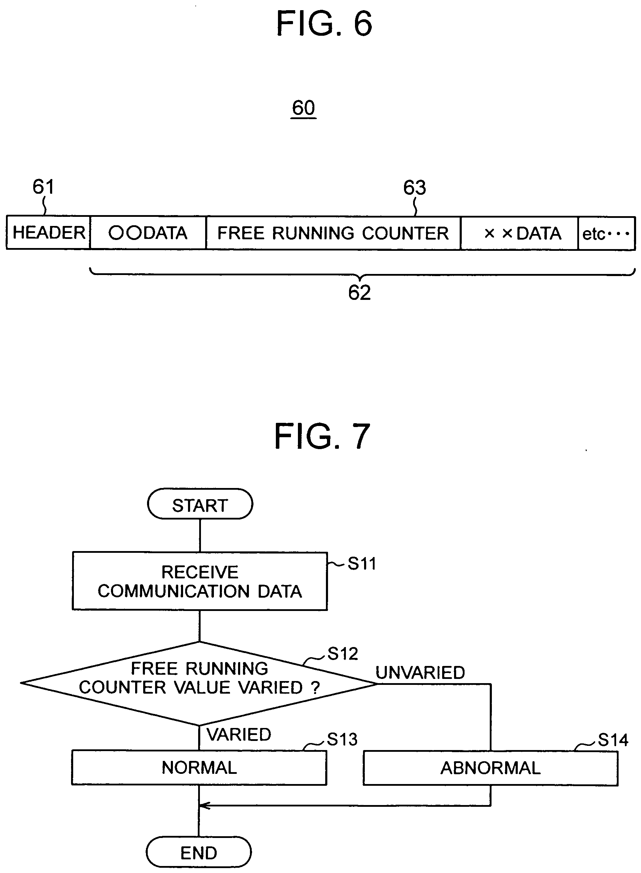

When the corresponding flag is not set in the executed program module in the judgment of the step S101, that is, when the corresponding flag is cleared, it is judged that the operation status (executed control program) is abnormal (step S105) (i.e. the monitoring program is judged not to be normally executed), communication data 60 (see Fig. 6) are transmitted through a communication line 51 to the second shut-off valve controller 50B (step S106) while containing judgment information indicating whether the flag is set or not (i.e., the monitoring program is executed normally or not), and then this processing is finished.
The monitoring program may be executed on the program modules every predetermined check time. That is, the judgment as to setting or non-setting of a flag is carried out at a predetermined time interval, for example, it may be carried out every time each program module is executed (i.e., a flag is set or no flag is set for each program module) or every time a predetermined number of program modules are executed.

The processing of the communication data at the second shut-off controller 50B side will be described in detail later, and the communication data will be described hereunder.

Fig. 6 is a diagram showing a communication data format used between the firs shut-off valve controller 50A and the second shut-off valve controller 50B.

Various kinds of data 62 are contained subsequently to header data 61 in the communication data 60, and a free running counter data 63 (i.e., the judgment information)is contained as a part of the various kinds of the data.

If it is judged in S101 that the flag corresponding to the executed program module is set, it is judged that the program execution state of the executed program module concerned is normal (step S102), the flag thus set is cleared or initialized (reset)(S103), and also the count value of the free running counter is incremented (step S104). Then, the communication data 60 are transmitted to the second shut-off valve controller 50B through the communication line 51 (step S106), and then the processing is finished.

Fig. 7 is a processing flowchart of the shut-off valve controller which receives the communication data 60.

In the foregoing description, the first shut-off valve controller 50A corresponds to a data communication transmitting side while the second shut-off valve controller 50B corresponds to a data communication receiving side, and thus the processing carried out by the second shut-off valve controller 50B will be described hereunder.

When receiving the communication data 60 (step S11), the second shut-off valve controller 50B extracts the free running counter data 63 from the communication data 60, and judges whether the count value of the free running counter is varied or not (renewed or not) (step S 12).

If it is judged in step S12 that the count value of the free running counter of the first shut-off valve controller 50A is varied (renewed), the second shut-off valve controller 50B judges that the software program for controlling the first shut-off valve controller 50A operates normally and also no abnormality is found in the result of the check (step S13), and then starts supply of fuel gas and shifts the processing to the normal processing.

If it is judged in step S12 that the count value of the free running counter of the first shut-off valve controller 50A is not varied (not renewed), the second shut-off valve controller 50B judges that the software program for controlling the first shut-off valve controller 50A does not operate normally or some abnormality is detected in the check result, and thus sets the fuel shut-off valve 33B to the shut-off state, whereby the supply of the fuel gas is shut off.

Next, the case where the second shut-off valve controller 50B corresponds to a communication data transmission side and the first shut-off valve controller 50A corresponds to a communication data receiving side will be described hereunder.

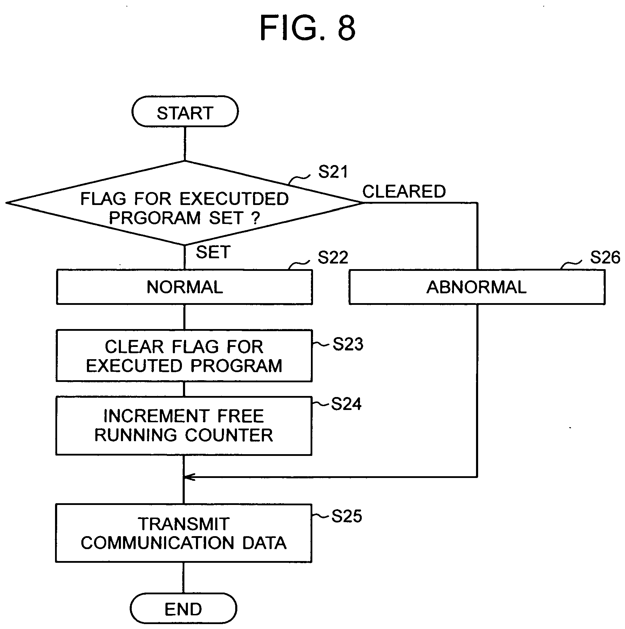

Fig. 8 is a processing flowchart (of program execution state checking means (monitoring program)) of the second shut-off valve controller 50B.

When it is judged that the processing of each of the program modules PM1, PM2, PM3, etc. is normally finished, the second shut-off valve controller 50B judges whether the corresponding flag is set in the program module executed (step S21).

When the corresponding flag is not set in the executed program module in the judgment of the step S21, that is, when the corresponding flag is cleared, it is judged that the present state is an abnormal state (step S26), communication data 60 (see Fig. 6) are immediately transmitted as judgment information through the communication line 51 to the first shut-off valve controller 50A(step S25), and then this processing is finished. In this case, the count value of the free running counter is not varied. The processing of the communication data is carried out by the first shut-off valve controller 50A in the same manner as the second shut-off valve controller 50B.

If it is judged in S21 that the flag corresponding to the executed program module is set, it is judged that the present state is a normal state (step S22), the flat thus set is cleared (reset)(S23), and thus the count value of the free running counter is incremented (step S24). Therefore, the communication data 60 containing the free running counter value thus incremented are transmitted to the first shut-off valve controller 50A through the communication line 51 (step S25), and then the processing is finished.

Next, the processing at the first shut-off valve controller 50A when receiving the communication data 60 from the second shut-off valve controller 50B will be described with reference to Fig. 7.

When receiving the communication data 60 (step S11), the second shut-off valve controller 50A extracts the free running counter data 63 from the communication data 60, and judges whether the count value of the free running counter is varied or not (renewed or not) (step S12).

If it is judged in step S12 that the count value of the free running counter of the second shut-off valve controller 50B is varied (renewed), the first shut-off valve controller 50A judges that the software program for controlling the second shut-off valve controller 50B operates normally and also no abnormality is found in the result of the check (step S13), and then starts supply of fuel gas and shifts the processing to the normal processing.

On the other hand, if it is judged in step S12 that the count value of the free running counter of the first shut-off valve controller 50A is not varied (not renewed), the first shut-off valve controller 50A judges that the software program for controlling the second shut-off valve controller 50B does not operate normally or some abnormality is detected in the check result, and thus sets the fuel shut-off valve 33B to the shut-off state, whereby the supply of the fuel gas is stopped.

Through the above processing, in the case where neither the fuel shut-off valve 33A nor the fuel shut-off valve 33B is set to the shut-off state, the normal fuel-supply starting processing is carried out, and shifted to the gas engine control processing. The gas engine control processing is carried out in the same manner as the first embodiment, and thus the description thereof is omitted.

As described above, according to this embodiment, when some abnormality is detected in the operation (for example, control program or the like) of at least one of the first shut-off valve controller 50A and the second shut-off valve controller 50B, at least one of the shut-off valves 33A and 33B is set to the shut-off state, so that the heat pump type air conditioner is prevented from being shifted to the operation mode while the first shut-off valve controller 50A or the second shut-off valve controller 50B falls into the abnormal state.

In the foregoing description, the controller 13, the first shut-off valve controller 50A and the second shut-off valve controller 50B are equipped separately from one another. However, the controller 13 and any one of the first shut-off valve controller 50A and the second shut-off valve controller 50B may be equipped integrally with each other. Furthermore, the number of shut-off valves and the number of the shut-off valve controllers are not limited to two, and it may be equal to three or more. At any rate, at least two different controllers which control different fuel shut-off valves according to respective control programs may be equipped.

Furthermore, in the above-described embodiment, the fuel shut-off valves 33A and 33B are controlled by the first shut-off valve controller 50A and the second shut-off valve controller 50B, and these controllers 50A and 50B are controlled on the basis of the plural control programs. The execution state of these control programs is monitored, and when abnormality occurs in these control programs, each fuel shut-off valve is set to the stop state (fuel supply is stopped).

In the above-described embodiment, it is judged by using the flag and the free running counter whether the control program (program module) for the other shut-off valve controller has been executed normally or not (whether any abnormality occurs in some program module of the other shut-off valve controller). However, the present invention is not limited to use of the flag and the free running counter, and any means may be used insofar as this means represents information clearly indicating whether the control program has been executed normally or not.

Furthermore, the judgment information representing whether any abnormality occurs in some program module may be initialized after it is transmitted to the other fuel shut-off valve. Still furthermore, the judgment information may be information indicating that the monitoring program for monitoring whether the control program (program module) for controlling the shut-off valve controller is executed normally or not. In this case, normality or abnormality of the monitoring program itself is judged, and if it is judged on the basis of the judgment information that the monitoring program is not normally executed, the shut-off valve controller which receives the judgment information concerned from the other shut-off valve controller judges that the other shut-off valve controller which transmits the judgment information concerned does not operate normally.

In the above embodiment, the count value of the free running counter may be renewed (incremented or decremented) every time it is judged through the monitoring program that each program module (control program) has been normally executed.

In the foregoing description, the fuel supply control device controls the fuel shut-off valve 33A and the fuel shut-off valve 33B as members to be controlled. However, the present invention may be applied to any member to be controlled insofar as it needs failsafe by setting the fuel supply to the shut-off state through the fuel shut-off valves when the fuel supply control device cannot operate normally. Specifically, the member to be controlled contains a storage unit for storing various kinds of data, an A/D converter for an analog sensor (temperature sensor or the like), etc.

As described above, according to the present invention, when some abnormality (abnormality causing factor) is contained in a controller (CPU), a memory, etc. (control programs, stored data, etc.) which needs failsafe for fuel gas supply, the abnormality is detected before the fuel gas supply operation is actually carried out, and the fuel gas supply operation is stopped on the basis of the abnormality thus detected. The abnormality causing factor contains abnormalities in the execution state of programs being executed in a controller, the programs themselves stored in memories, etc.

## Claims

1. An air conditioner having a compressor (16) which is disposed in an outdoor unit (11) and driven by an engine (30), and a fuel supply control device (13, 50A, 50B) for controlling fuel supply to the engine (30) through at least two fuel shut-off valves (33A, 33B), wherein the fuel control device includes an operation state judging means for judging whether the fuel control device itself can operate normally or not, and a shut-off state holding means for holding at least one of the shut-off valves (33A, 33B) to a fuel shut-off state under which the fuel supply to the engine (30) is shut off when it is judged by the operation state judging means that the fuel supply control device itself cannot operate normally, **characterized in that** the fuel supply control device (13) contains a watch dog timer (13F), and the fuel supply control device (13) starts a timer operation of the watch dog timer (13F) when the operation state judging means judges that the fuel supply control device can normally operate under a state that the engine does not drive the compressor, and shifts the control operation to a re-start operation by a watch dog interrupt processing based on the watch dog timer when the operation state judging means judges that the fuel supply control device cannot operate normally after the start of the timer operation of the watch dog timer.

2. The air conditioner according to claim 1, wherein the control device contains a data storage unit (13B, 13C, 13D) for storing various kinds of data for the fuel supply control processing, and controls the fuel shut-off valves (33A, 33B) and the data storage unit (13B, 13C, 13D).

3. The air conditioner according to claim 2, wherein the operation state judging means judges whether each of the data stored in the data storage unit (13B, 13C, 13D) is normal or abnormal, and judges on the basis of the judgment result as to normality or abnormality of each data stored in the data storage unit whether the fuel supply control device can operate normally or not.

4. The air conditioner according to claim 2, wherein the data storage unit contains at least any one of a register (13B), RAM (13C) and ROM (13D).

5. An air conditioner having a compressor (16) which is disposed in an outdoor unit (11) and driven by an engine (30), and a fuel supply control device (13, 50A, 50B) for controlling fuel supply to the engine (30) through at least two fuel shut-off valves (33A, 33B), wherein the fuel control device includes an operation state judging means for judging whether the fuel control device itself can operate normally or not, and a shut-off state holding means for holding at lest one of the shut-off valves (33A, 33B) to a fuel shut-off state under which the fuel supply to the engine (30) is shut off when it is judged by the operation state judging means that the fuel supply control device itself cannot operate normally, **characterized in that**
wherein the fuel supply control device comprises at least two shut-off valve controllers (50A, 50B) for controlling the fuel shut-off valves (33A, 33B) respectively, each shut-off valve controller being equipped with the operation state judging means for judging whether the fuel supply control device can operate normally,
wherein the operation state judging means of each of the shut-off valve controllers contains program execution state checking means for checking whether a control program for controlling the corresponding shut-off valve controller has been executed normally or not and creating judgment information representing whether the control program concerned has been executed normally or not, communication data receiving/transmitting means for receiving/transmitting communication data containing at least the judgment information from/to the other shut-off valve controller, and judging means for judging on the basis of the judgment information transmitted from the other shut-off valve controller whether the other shut-off valve controller can operate normally and judging that the fuel supply control device itself cannot operate normally when it is judged that the other shut-off valve controller cannot operate normally.

6. The air conditioner according to claim 5, wherein when the shut-off valve controller shuts off the fuel shut-off valve to be controlled by the shut-off valve controller concerned when the operation status judging means judges that the other shut-off valve controller does not operate normally.

7. The air conditioner according to claim 5, wherein each of the fuel shut-off valve controllers is equipped with a counter for incrementing a count value thereof when it is judged that the control program has been normally executed, the judgment information contains the count value, and the judging means judges on the basis of variation of the count value whether the control program of the other shut-off valve controller has been normally executed or not and judges on the basis of the judgment result concerned whether the fuel supply control device itself can operate normally.

8. The air conditioner according to claim 5, wherein the control program comprises plural program modules, and when each of the plural program modules has been executed normally, the program module sets a flag.

9. The air conditioner according to claim 8, wherein the control program comprises plural program modules, and it is judged whether the flag is set or not every time each program module is executed or every time a predetermined number of program modules are executed.

10. The air conditioner according to claim 9, wherein the program execution state checking means checks on the basis of setting or non-setting of the flag whether each program module has been executed normally or not, the communication data receiving/transmitting means transmits the check result as the judgment information, and the judging means judges on the basis of the judgment information transmitted from the other shut-off valve controller whether the other shut-off valve controller can operate normally and thus judges that the fuel supply control device itself can operate normally.

## Patentansprüche

1. Klimaanlage mit einem Kompressor (60), der in einer Außeneinheit (11) angeordnet ist und durch einen Motor (30) angetrieben wird, und einer Brennstoff-Steuervorrichtung (13, 50A, 50B) zur Steuerung der Brennstoffzufuhr an den Motor (30) durch mindestens zwei Brennstoff-Sperrventile (33A, 33B), wobei die Brennstoff-Steuervorrichtung eine Betriebszustand-Beurteilungseinrichtung aufweist um zu beurteilen, ob die Brennstoff-Steuervorrichtung selbst normal oder nicht arbeiten kann, und einer Sperrzustand-Halteeinrichtung zum Halten von mindestens einem der Sperrventile (33A, 33B) in einem Sperrzustand, bei dem die Brennstoffzufuhr an den Motor (30) gesperrt ist, wenn durch die Betriebszustand-Beurteilungseinrichtung beurteilt wird, dass die Brennstoffzufuhr-Steuervorrichtung selbst nicht normal arbeiten kann, **dadurch gekennzeichnet, dass** die Brennstoffzufuhr-Steuervorrichtung (13) einen Überwachungszeitgeber (13F) aufweist und die Brennstoffzufuhr-Steuervorrichtung (13) den Zeitgeberbetrieb des Überwachungszeitgebers (13F) startet, wenn die Betriebszustand-Beurteilungseinrichtung beurteilt, dass die Brennstoffzufuhr-Steuervorrichtung in einem Zustand normal arbeitet, in dem der Motor den Kompressor nicht antreibt, und den Steuervorgang zu einem Neustart-Vorgang durch eine Überwachungs-Unterbrechungsverarbeitung basierend auf dem Überwachungszeitgeber verschiebt, wenn die Betriebszustand-Beurteilungseinrichtung beurteilt, dass die Brennstoffzufuhr-Steuervorrichtung nach dem Start des Zeitgeberbetriebs des Überwachungszeitgebers nicht normal arbeiten kann.

2. Klimaanlage nach Anspruch 1, wobei die Steuervorrichtung eine Datenspeichereinheit (13B, 13C, 13D) zum Speichern verschiedener Arten von Daten für die Brennstoff-Steuerverarbeitung aufweist und die Brennstoff-Sperrventile (33A, 33B) und die Datenspeichereinheit (13B, 13C, 13D) steuert.

3. Klimaanlage nach Anspruch 2, wobei die Betriebszustand-Beurteilungseinrichtung beurteilt, ob alle Daten, die in der Datenspeichereinheit (13B, 13C, 13D) gespeichert sind, normal oder anomal sind, und aufgrund des Beurteilungsergebnisses hinsichtlich der Normalität oder der Anomalie jeder in der Datenspeichereinheit gespeicherten Daten beurteilt, ob die Brennstoffzufuhr-Steuervorrichtung normal arbeiten kann oder nicht.

4. Klimaanlage nach Anspruch 2, wobei die Datenspeichereinheit mindestens eines von einem Register (13B), RAM (13C) und ROM (13D) enthält.

5. Klimaanlage mit einem Kompressor (16), der in einer Außeneinheit (11) angeordnet ist und von einem Motor (30) angetrieben wird, und einer Brennstoffzufuhr-Steuervorrichtung (13, 50A, 50B) zum Steuern der Brennstoffzufuhr an den Motor (30) durch mindestens zwei Brennstoff-Sperrventile (33A, 33B), wobei die Brennstoff-Steuervorrichtung eine Betriebszustand-Beurteilungseinrichtung zum Beurteilen aufweist, ob die Brennstoff-Steuervorrichtung selbst normal arbeiten kann oder nicht, und eine Sperrzustand-Halteeinrichtung zum Halten mindestens eines der Sperrventile (33A, 33B) in einem Brennstoff-Sperrzustand, bei dem die Brennstoffzufuhr an den Motor (30) gesperrt ist, wenn durch die Betriebszustand-Beurteilungseinrichtung beurteilt wird, dass die Brennstoffzufuhr-Steuervorrichtung selbst nicht normal arbeiten kann, **dadurch gekennzeichnet, dass**
die Brennstoffzufuhr-Steuervorrichtung mindestens zwei Sperrventil-Controller (50A, 50B) zum jeweiligen Steuern der Brennstoff-Sperrventile (33A, 33B) aufweist, wobei jeder Sperrventil-Controller mit der Betriebszustand-Beurteilungseinrichtung zum Beurteilen ausgestattet ist, ob die Brennstoffzufuhr-Steuervorrichtung normal arbeiten kann,
wobei die Betriebszustand-Beurteilungseinrichtung jedes der Sperrventil-Controller eine Programm-Ausführungszustand-Prüfeinrichtung zur Überprüfung aufweist, ob ein Steuerprogramm zum Steuern des entsprechenden Sperrventil-Controllers normal ausgeführt wurde oder nicht, und zur Erzeugung einer Beurteilungsinformation, die angibt, ob das betreffende Steuerprogramm normal ausgeführt wurde oder nicht, eine Kommunikationsdaten-Empfangs/Sendeeinrichtung zum Empfangen/Senden von Kommunikationsdaten, die mindestens die Beurteilungsinformation von/an den anderen Sperrventil-Controller enthält, und eine Beurteilungseinrichtung zur Beurteilung auf Grundlage der Beurteilungsinformation, die von dem anderen Sperrventil-Controller gesendet wurde, ob der andere Sperrventil-Controller normal arbeiten kann, und zur Beurteilung, dass die Brennstoffzufuhr-Steuervorrichtung selbst nicht normal arbeiten kann, wenn beurteilt wird, dass der andere Sperrventil-Controller nicht normal arbeiten kann.

6. Klimaanlage nach Anspruch 5, wobei, wenn der Sperrventil-Controller das Brennstoff-Sperrventil, das von dem betreffenden Sperrventil-Controller gesteuert wird, sperrt, wenn die Betriebszustand-Beurteilungseinrichtung beurteilt, dass der andere Sperrventil-Controller nicht normal arbeitet.

7. Klimaanlage nach Anspruch 5, wobei jeder der Brennstoff-Sperrventil-Controller mit einem Zähler zur Inkrementierung seines Zählwertes ausgestattet ist, wenn beurteilt wird, dass das Steuerprogramm normal ausgeführt wurde, wobei die Beurteilungsinformation den Zählwert enthält und die Beurteilungseinrichtung aufgrund einer Variation des Zählwertes beurteilt, ob das Steuerprogramm des anderen Sperrventil-Controller normal ausgeführt wurde oder nicht, und auf Grundlage des betreffenden Beurteilungsergebnisses beurteilt, ob die Brennstoffzufuhr-Steuervorrichtung selbst normal arbeiten kann.

8. Klimaanlage nach Anspruch 5, wobei das Steuerprogramm mehrere Programmmodule aufweist, und wenn jedes der mehreren Programmmodule normal ausgeführt wurde, das Programmmodul ein Flag gesetzt.

9. Klimaanlage nach Anspruch 8, wobei das Steuerprogramm mehrere Programmmodule aufweist und jedes Mal, wenn jedes Programmodul ausgeführt wird, oder jedes Mal, wenn eine vorgegebene Zahl von Programmmodulen ausgeführt wird, beurteilt wird, ob das Flag gesetzt ist oder nicht.

10. Klimaanlage nach Anspruch 9, wobei die Programm-Ausführungszustand-Prüfeinrichtung auf Grundlage des Setzens oder des Nicht-Setzens des Flag beurteilt, ob jedes Programmodul normal ausgeführt wurde oder nicht, wobei die Kommunikationsdaten-Empfangs/Sendeeinrichtung das Prüfergebnis als Beurteilungsinformation übermittelt und die Beurteilereinrichtung auf Grundlage der Beurteilungsinformation, die von dem anderen Sperrventil-Controller übermittelt wird, beurteilt, ob der andere Sperrventil-Controller normal arbeitet und somit beurteilt, das die Brennstoffzufuhr-Steuervorrichtung selbst normal arbeiten kann.

## Revendications

1. Climatiseur doté d'un compresseur (16) qui est disposé dans une unité (11) d'extérieur et entraîné par un moteur (30), et d'un dispositif (13, 50A, 50B) de commande d'alimentation en carburant servant à commander l'arrivée de carburant au moteur (30) par l'intermédiaire d'au moins deux vannes (33A, 33B) de coupure de carburant, le dispositif de commande de carburant comprenant un moyen de jugement d'état de fonctionnement servant à juger si le dispositif de commande de carburant lui-même peut fonctionner normalement ou non, et un moyen de maintien d'état de coupure servant à maintenir au moins une des vannes (33A, 33B) de coupure dans un état de coupure de carburant dans lequel l'arrivée de carburant au moteur (30) est coupée lorsqu'il est jugé par le moyen de jugement d'état de fonctionnement que le dispositif de commande d'alimentation en carburant lui-même ne peut pas fonctionner normalement, **caractérisé en ce que** le dispositif (13) de commande d'alimentation en carburant contient un temporisateur (13F) de chien de garde, et le dispositif (13) de commande d'alimentation en carburant démarre un fonctionnement de temporisateur du temporisateur (13F) de chien de garde lorsque le moyen de jugement d'état de fonctionnement juge que le dispositif de commande d'alimentation en carburant peut fonctionner normalement dans un état où le moteur n'entraîne pas le compresseur, et fait passer le fonctionnement de la commande à un fonctionnement de redémarrage par un traitement d'interruption de chien de garde d'après le temporisateur de chien de garde lorsque le moyen de jugement d'état de fonctionnement juge que le dispositif de commande d'alimentation en carburant ne peut pas fonctionner normalement après le démarrage du fonctionnement de temporisateur du temporisateur de chien de garde.

2. Climatiseur selon la revendication 1, le dispositif de commande contenant une unité (13B, 13C, 13D) de stockage de données servant à stocker divers types de données pour le traitement de commande d'alimentation en carburant, et commandant les vannes (33A, 33B) de coupure de carburant et l'unité (13B, 13C, 13D) de stockage de données.

3. Climatiseur selon la revendication 2, le moyen de jugement d'état de fonctionnement jugeant si chacune des données stockées dans l'unité (13B, 13C, 13D) de stockage de données est normale ou anormale, et jugeant, sur la base du résultat de jugement de la normalité ou de l'anormalité de chaque donnée stockée dans l'unité de stockage de données, si le dispositif de commande d'alimentation en carburant peut fonctionner normalement ou non.

4. Climatiseur selon la revendication 2, l'unité de stockage de données contenant au moins un élément quelconque parmi un registre (13B), une RAM (13C) et une ROM (13D).

5. Climatiseur doté d'un compresseur (16) qui est disposé dans une unité (11) d'extérieur et entraîné par un moteur (30), et d'un dispositif (13, 50A, 50B) de commande d'alimentation en carburant servant à commander l'arrivée de carburant au moteur (30) par l'intermédiaire d'au moins deux vannes (33A, 33B) de coupure de carburant, le dispositif de commande de carburant comprenant un moyen de jugement d'état de fonctionnement servant à juger si le dispositif de commande de carburant lui-même peut fonctionner normalement ou non, et un moyen de maintien d'état de coupure servant à maintenir au moins une des vannes (33A, 33B) de coupure dans un état de coupure de carburant dans lequel l'arrivée de carburant au moteur (30) est coupée lorsqu'il est jugé par le moyen de jugement d'état de fonctionnement que le dispositif de commande d'alimentation en carburant lui-même ne peut pas fonctionner normalement,
**caractérisé en ce que**
le dispositif de commande d'alimentation en carburant comporte au moins deux commandes (50A, 50B) de vannes de coupure servant à commander respectivement les vannes (33A, 33B) de coupure de carburant, chaque commande de vanne de coupure étant équipée du moyen de jugement d'état de fonctionnement servant à juger si le dispositif de commande d'alimentation en carburant peut fonctionner normalement,
le moyen de jugement d'état de fonctionnement de chaque des commandes de vannes de coupure contenant un moyen de vérification d'état d'exécution de programme servant à vérifier si un programme de commande servant à commander la commande de vanne de coupure correspondante a été exécuté normalement ou non et à créer des informations de jugement indiquant si le programme de commande concerné a été exécuté normalement ou non, un moyen de réception/d'émission de données de communications servant à recevoir/émettre des données de communications contenant au moins les informations de jugement en provenance/à destination de l'autre commande de vanne de coupure, et un moyen de jugement servant à juger, sur la base des informations de jugement émises à partir de l'autre commande de vanne de coupure, si l'autre commande de vanne de coupure peut fonctionner normalement et à juger que le dispositif de commande d'alimentation en carburant lui-même ne peut pas fonctionner normalement lorsqu'il est jugé que l'autre commande de vanne de coupure ne peut pas fonctionner normalement.

6. Climatiseur selon la revendication 5, la commande de vanne de coupure fermant la vanne de coupure de carburant à commander par la commande de vanne de coupure concernée lorsque le moyen de jugement d'état de fonctionnement juge que l'autre commande de vanne de coupure ne fonctionne pas normalement.

7. Climatiseur selon la revendication 5, chacune des commandes de vannes de coupure de carburant étant équipée d'un compteur servant à incrémenter une valeur de comptage de celui-ci lorsqu'il est jugé que le programme de commande a été exécuté normalement, les informations de jugement contenant la valeur de comptage, et le moyen de jugement jugeant, sur la base d'une variation de la valeur de comptage, si le programme de commande de l'autre commande de vanne de coupure a été exécuté normalement ou non et jugeant, sur la base du résultat de jugement concerné, si le dispositif de commande d'alimentation en carburant lui-même peut fonctionner normalement.

8. Climatiseur selon la revendication 5, le programme de commande comportant une pluralité de modules de programme, et lorsque chaque module de la pluralité de modules de programme a été exécuté normalement, le module de programme positionnant un fanion.

9. Climatiseur selon la revendication 8, le programme de commande comportant une pluralité de modules de programme, et un jugement selon lequel le fanion est positionné ou non étant effectué chaque fois que chacun des modules de programme est exécuté ou chaque fois qu'un nombre prédéterminé de modules de programme sont exécutés.

10. Climatiseur selon la revendication 9, le moyen de vérification d'état d'exécution de programme vérifiant, sur la base du positionnement ou du non-positionnement du fanion, si chaque module de programme a été exécuté normalement ou non, le moyen de réception/d'émission de données de communications émettant le résultat de vérification en tant qu'informations de jugement, et le moyen de jugement jugeant, sur la base des informations de jugement émises à partir de l'autre commande de vanne de coupure, si l'autre commande de vanne de coupure peut fonctionner normalement et jugeant ainsi que le dispositif de commande d'alimentation en carburant lui-même peut fonctionner normalement.
